# EUROPEAN PATENT APPLICATION

(11) **EP 4 530 588 A1**
(43) Date of publication of application: **02.04.2025**
(21) Application number: 24189366.8
(22) Date of filing: 18.07.2024
(51) Int. Cl.: G01K 1/08, G01K 1/14, G01K 1/143, G01K 7/22, H01M 10/48, H01M 10/42, H01M 50/213, H01M 50/505, H01M 50/519

(54) **TEMPERATURE COLLECTING DEVICE, CCS ASSEMBLY, AND BATTERY MODULE**

(30) Priority: 25.09.2023 CN 202311250675; 25.09.2023 CN 202322618727 U
(71) Applicant: Eve Energy Co., Ltd., Huizhou, Guangdong 516006 (CN)
(72) Inventor: Huang, Zhihua, Huizhou,Guangdong, 516006 (CN)
(74) Representative: Petraz, Gilberto Luigi

(57) **Abstract**

Disclosed in the present disclosure is a temperature collecting device, CCS assembly and a battery module, including a base plate, the base plate including an exposed surface and a connecting surface opposite to the exposed surface, the connecting surface being arranged to be electrically connected to an FPC; an NTC, the NTC being integrally connected to the connecting surface; and an encapsulating structure, the encapsulating structure being integrally connected to the connecting surface to fully cover the NTC, the encapsulating structure being arranged to be in contact with a surface of an object to be temperature-measured.

## Description

### Field

The present disclosure relates to the technical field of batteries and, particularly, to a temperature collecting device, a cells contact system (hereinafter referred as CCS) assembly, and a battery module.

### Background

Currently, FPC (Flexible Printed Circuit) welding is often used for SMT (Surface Mount Technology) temperature sensors in battery projects to collect the temperature of the cells, which requires to design a complex structure for fixing the NTC (Negative Temperature Coefficient Resistance) onto a plastic support.

### Summary

Designing a complex NTC fixing structure on the plastic support increases the molding difficulty of the plastic support, and it is difficult to assemble the NTC to the plastic support due to insufficient space, which increases the difficulty of assembly.

As a first aspect, provided in the present disclosure is a temperature collecting device, including a base plate, the base plate including an exposed surface and a connecting surface opposite to the exposed surface, the connecting surface being arranged to be electrically connected to an FPC; an NTC, the NTC being integrally connected to the connecting surface; and an encapsulating structure, the encapsulating structure being integrally connected to the connecting surface to fully cover the NTC, the encapsulating structure being arranged to be in contact with a surface of an object to be temperature-measured.

As a second aspect, provided in the present disclosure is a CCS assembly, connected to a side of poles of cells, including an FPC, a support, a conductive busbar, and a temperature collecting device, in which the support is mounted on a side of poles of cells, the conductive busbar and the FPC are respectively mounted on the support, the conductive busbar is abutted against poles of cells, the connecting surface of the base plate is arranged to be connected to the FPC and the conductive busbar respectively, and the encapsulating structure is in contact with at least one of: poles of cells and a lateral surface of cells where poles are positioned.

As a third aspect, provided in the present disclosure is a battery pack, including a battery-pack housing, a plurality of cells positioned within the battery-pack housing, and a CCS assembly.
1. By adopting the base plate for collecting the temperature and voltage of the cell, it omits the need to design the traditional NTC fixing structure in the support, which achieves automatic assembly and significantly reduces the cost of labor, and also the base plate provides a good heat dissipation and a more accurate collection of the temperature of the cell;
2. By connecting the base plate with the FPC and conductive busbar respectively, the temperature data of the cell collected by the NTC is smoothly transferred to the FPC, which is also connected to the conductive busbar to achieve the synchronization effect with the temperature of the conductive busbar, which is conducive to the improvement of the accuracy of the collection of the temperature of the cell;
3. By welding the base plate with the FPC, stable data transmission is achieved, and the collected temperature and voltage signals are transmitted. By welding the base plate with the conductive busbar, the welding stability is improved, and the welding speed is fast, which is conducive to the achievement of rapid assembly of the base plate;
4. By adopting an encapsulating structure to encapsulate the NTC on the base plate, it allows the base plate to be connected and fixed with the FPC and the conductive busbar, and the encapsulating structure is directly abutted against the cell to collect the temperature and voltage.

### Brief description of the drawings

Fig. 1 shows a schematic structural diagram of a temperature collecting fixing structure of an embodiment of the present disclosure;
Fig. 2 shows a schematic assembly structure diagram of an embodiment of the present disclosure;
Fig. 3 shows an enlarged view of Fig. 2 at A.

The meanings of the attached markings are as follows: 1 base plate; 11 exposing surface; 12 connecting surface; 13 first connecting plate; 14 second connecting plate; 2 NTC; 3 encapsulating structure; 4 FPC; 41 second assembly hole; 42 connecting part; 5 support; 51 first connecting surface; 511 skeleton slot; 512 first assembly column; 52 second connecting surface; 521 second assembly column; 6 conductive busbar; 61 first assembly hole; 7 cell; 71 pole.

### Detailed description of the embodiments

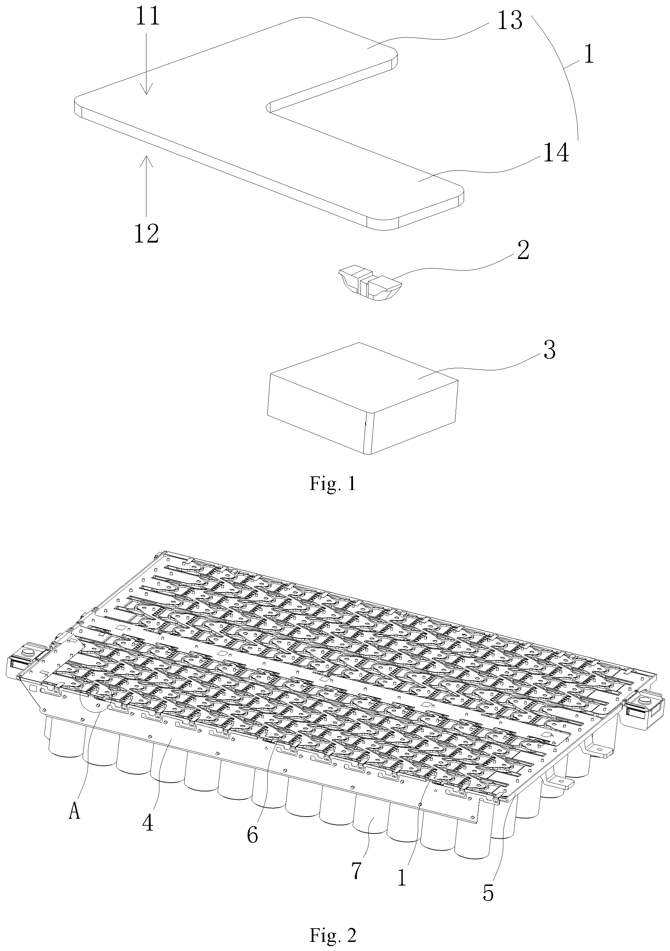

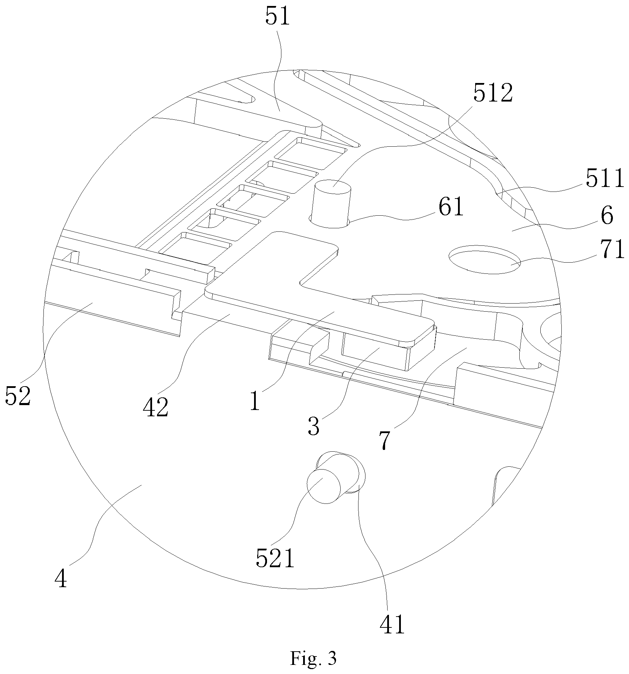

Referring to Figs. 1-3, disclosed in the present disclosure is a temperature collecting device, including a base plate 1, an NTC 2, and an encapsulating structure 3, in which the base plate 1 includes an exposed surface 1 and a connecting surface 12 opposite to the exposed surface 11, the NTC 2 is integrally connected to the connecting surface 12, the encapsulating structure is integrally connected to the connecting surface 12 to fully cover the NTC 2, so as to effectively serve as a protection for NTC 2. Besides encapsulating the NTC 2, the connecting surface 12 is electrically connected to the FPC 4 for transferring data, and is connected by welding. The encapsulating structure 3 is arranged to be in contact with a surface of an object to be temperature-measured, which may be fixed to a fixture next to the obj ect to be temperature-measured in order to improve the stability of the assembly of the base plate 1 itself. By connecting the base plate 1 to the FPC 4, and enabling the NTC 2 positioned on the base plate 1 to directly contact the object to be measured by encapsulation to achieve temperature collection, which saves the step of designing a fixing structure on the object to be measured.

The encapsulating structure 3 is an injection molded part integrally connected to the connecting surface 12 of the base plate 1, the integral connection includes, but is not limited to, fusion joining, welding, or bonding, by which the integral connection improves the connecting stability between them, as long as it is sufficient to connect the base plate 1 to the corresponding FPC 4 at a suitable position. Specifically, the encapsulating structure 3 has a certain height, is capable of integrally connecting the NTC 2 to the connecting surface 12, and has good mechanical properties, chemical stability, and electrical properties. Therefore, the encapsulating structure 3 in the present embodiment 1 is made of epoxy resin, in which the epoxy resin has good mechanical properties, chemical stability and electrical properties, as well as properties such as its low toxicity and processability.

In the present embodiment 1, the aforementioned structure is applied to the technical field of batteries, the base plate 1 is made of aluminum, and the NTC 2 is an SMT-NTC. The base plate 1 is welded to the conductive busbar 6 on a surface of cells 7, the conductive busbar 6 is abutted against poles 71 of cells 7, the base plate 1 is also connected to the FPC 4 within the battery pack, so that the encapsulating structure 3 is, according to the height of itself, directly in contact with at least one of: poles 71 of cells 7 and a lateral surface of cells 7 where poles 71 are positioned, which achieves the effect of temperature measurement on surfaces of cells. Therefore, it is unnecessary to set up a complicated welding structure on the battery support 5, which reduces the difficulty of the mold of the support 5, and improves the assembly efficiency and reduces the difficulty of assembly by a direct encapsulation method to perform a contact collection. It should be noted that the temperature collecting device herein is not limited to application in the field of batteries only.
the base plate 1 includes a circuit board, an insulating layer, and a metallic base plate, in which the metallic base plate is not limited to a base plate made of aluminum, the circuit board forms the connecting surface 12, the metallic base plate forms the exposed surface 11, and the insulating layer is positioned between the metallic base plate and the circuit board, which enables the base plate 1 to have data transmission capability to transmit the voltage and temperature information collected by the NTC 2. The metallic base plate has good thermal conductivity, and the insulating layer prevents the metallic base plate from affecting the circuit board.

In some implementations, in order to distinguish between fixing, connecting and temperature measurement of the base plate 1, the base plate 1 is divided into a first connecting plate 13 and a second connecting plate 14 integrally formed. The first connecting plate 13 is connected to the conductive busbar 6 and the FPC 4 of cells 7, and the NTC 2 is positioned on the second connecting plate 14. The base plate 1 is divided into two parts of a first connecting plate 13 and a second connecting plate 14, which may be used to connect different positions, respectively. Therefore, it may achieve the structure of adapting different battery supports 5 to achieve the effect of contact assembly and temperature measurement with cells 7, which is conducive to reducing the difficulty of its own production and improving the production efficiency, and also meets the effect of multiple connections. It should be noted that an angle between a length direction of the first connecting plate 13 and that of the second connecting plate 14 ranges from 15° to 180°. In the present implementation, the angle between a length direction of the first connecting plate 13 and that of the second connecting plate 14 is 90°. In other implementations, the first connecting plate 13 and the second connecting plate 14 may be of coplanar or non-coplanar structure, as long as it is sufficient to achieve the above connection, fixation, and temperature measurement effects.

The present disclosure is also specifically related to a CCS assembly, connected to a side of poles 71 of cells 7, including an FPC 4, a support 5, a conductive busbar 6 and a temperature collecting device, in which the support 5 is mounted on a side of poles 71 of cells 7, the support 5 includes a first connecting surface 51 and a second connecting surface 52, the first connecting surface 51 covers surfaces where end surfaces of the poles 71 of a plurality of cells 7 are located, the second connecting surface 52 is vertically connected to the first connecting surface 51, thus at least one second connecting surface 52 is provided, and an axis of each cell 7 is parallel to the second connecting surface 52. The first connecting surface 51 is designed to be skeletonized corresponding to the pole 71 of each cell 7, and the conductive busbar 6 is provided at each skeletonized position and is in contact with poles 71 of cells 7. The conductive busbars 6 are mutually conducting, the FPC 4 is provided on the second connecting surface 52, and the connecting surface 12 of the first connecting plate of the base plate 1 is connected to the FPC 4 and the conductive busbar 6 respectively. The encapsulating structure 3 on the second connecting plate 14 is in contact with at least one of: poles 71 of cells 7 and a lateral surface of cells 7 where poles 71 are positioned, which allows a temperature collecting fixing structure to be set up on the CCS assembly without setting up a corresponding complex structure on the support 5. It is sufficient to connect the base plate 1 to the FPC 4 and the conductive busbar 6, and the encapsulating structure 3 is able to be directly abutted against the sides of cells 7 on which the poles 71 are positioned, to achieve the collection of temperature and voltage.

The welding between the first connecting plate 13 of the base plate 1 and the FPC4 is performed by SMT welding, and the welding between the first connecting plate 13 of the base plate 1 and the conductive busbar 6 is performed by laser welding, which allows for the connection of the first connecting plate 13 to the FPC4 and the conductive busbar 6, respectively. The SMT welding ensures that the circuit of the FPC4 is connected to the circuit board within the base plate 1 to achieve signal transmission. The laser welding enables the metallic base plate of the base plate 1 to be fixed with the conductive busbar 6, and enables the temperature of busbar 6 to be directly transmitted to the metallic base plate, so that the encapsulating structure 3 receives the temperature of the conductive busbar 6 on one side, and receives the temperature of the cells 7 on the other side, which improves the accuracy and stability of the collection of the temperature and the voltage of the cells 7. It is to be noted that in other implementations, the connection method between the first connecting plate 13 with the FPC 4 and the conductive busbar 6 is not specifically limited, as long as it is sufficient to achieve the effect of the above connection.

In order to improve the assembly stability of the conductive busbar 6, the first connecting surface 51 is provided with a plurality of skeleton slots 511 in communication with each other and a plurality of assembly columns 512, the conductive busbar 6 is mounted within the skeleton slot 511 where each cell 7 is positioned, the conductive busbar 6 is abutted against poles 71 of cells 7, the conductive busbar 6 is provided with a first assembly hole 61, and the first assembly hole 61 is cooperated with the first assembly column 512 for position-restricting. The conductive busbar 6 may be fixed to the first connecting surface 51 to achieve the conduction with poles 71 of cells 7.

In order to improve the assembly stability of the FPC 4, the second connecting surface 52 is provided with a plurality of second assembly columns 521, the FPC 4 is provided with a plurality of second assembly holes 41 corresponding to the plurality of second assembly columns 521, and the second assembly hole 61 is cooperated with the second assembly column 512 for position-restricting. The FPC 4 may be fixed to the second connecting surface 52 to achieve fixation therebetween, which provides a stable environment for the conduction of the FPC 4 with the base plate 1.

It is to be noted that the first assembly column 512 and the second assembly column 521 described are only one way of fixing the conductive busbar 6 and the FPC 4 in the present implementation, which includes, but is not limited to, a snap-fit connection, a threaded connection, a welding connection or a bonding connection in other implementations.

In embodiment 1, the FPC 4 is extended towards the first connecting surface 51 and bent to form a connecting part 42, and the connecting part 42 is connected to the connecting surface 12 of the base plate 1, which achieves the connection between the FPC 4 positioned on the second connecting surface 52 and the base plate 1 positioned on the first connecting surface 51, so as to achieve a non-coplanar connection. A height of the encapsulating structure 3 is identical to those of poles 71 of cells 7, which is 2mm, which is conducive to measuring temperature and voltage on a side of the cell 7 where the pole 71 is positioned, and the encapsulating structure 3 is not in contact with the pole 71. This enables the encapsulating structure 3 to be directly abutted against a side of cells 7 where poles 71 are positioned after the assembly of the base plate 1. The encapsulating structure 3 made of epoxy resin may well transfer the temperature to the NTC 2, which facilitates the collection of the temperature and the voltage on the surface of the cells by the NTC 2. It is to be noted that, in other implementations, as long as it is sufficient that a height of the encapsulating structure 3 is the same as those of poles 71 of cells 7, a range of parameters is not specifically limited. In some implementations, the encapsulating structure 3 may also be partially in contact with the sides of the poles 71, to improve the collection effect.

The present disclosure also relates to a battery pack, including a battery-pack housing, a plurality of cells 7 positioned within the battery-pack housing, and a CCS assembly, which improves the assembly efficiency of the temperature collecting device and the CCS assembly within the battery pack.

In summary, a temperature collecting device, a CCS assembly, and a battery module provided in the present disclosure provide the following technical effects:
1. By adopting the base plate 1 for collecting the temperature and voltage of the cell 7, it omits the need to design the traditional NTC 2 fixing structure in the support 5, which achieves automatic assembly and significantly reduces the cost of labor, and also the base plate 1 provides a good heat dissipation and a more accurate collection of the temperature of the cell 7;
2. By connecting the base plate 1 with the FPC 4 and conductive busbar 6 respectively, the temperature data of the cell 7 collected by the NTC 2 is smoothly transferred to the FPC 4, which is also connected to the conductive busbar 6 to achieve the synchronization effect with the temperature of the conductive busbar 6, which is conducive to the improvement of the accuracy of the collection of the temperature of the cell 7;
3. By welding the base plate 1 with the FPC 4, stable data transmission is achieved, and the collected temperature and voltage signals are transmitted. By laser-welding the base plate 1 with the conductive busbar 6, the welding stability is improved, and the welding speed is fast, which is conducive to the achievement of rapid assembly of the base plate 1;
4. By adopting an encapsulating structure to encapsulate the NTC 2 on the base plate 1, it allows the base plate 1 to be connected and fixed with the FPC 4 and the conductive busbar 6, and the encapsulating structure 3 is directly abutted against the cell 7 to collect the temperature and voltage.

## Claims

1. A temperature collecting device, comprising:
a base plate (1), the base plate (1) comprising an exposed surface (11) and a connecting surface (12) opposite to the exposed surface (11), the connecting surface (12) being arranged to be electrically connected to an FPC;
an NTC (2), the NTC being integrally connected to the connecting surface (2); and
an encapsulating structure (3), the encapsulating structure (3) being integrally connected to the connecting surface (12) to fully cover the NTC (2), the encapsulating structure (3) being arranged to be in contact with a surface of an object to be temperature-measured.

2. The temperature collecting device according to claim 1, wherein the base plate (1) comprises a circuit board, an insulating layer, and a metallic base plate, the circuit board forms the connecting surface (12), the metallic base plate forms the exposed surface (11), and the insulating layer is positioned between the metallic base plate and the circuit board.

3. The temperature collecting device according to claim 1, wherein the base plate (1) comprises a first connecting plate (13) and a second connecting plate (14) that are integrally formed, the first connecting plate (13) is arranged to be connected to an FPC (4) and a conductive busbar (6) respectively, and the NTC (2) is positioned on the second connecting plate (14).

4. The temperature collecting device according to claim 3, wherein an angle between a length direction of the first connecting plate (13) and that of the second connecting plate (14) ranges from 15° to 180°.

5. The temperature collecting device according to any one of claims 1-4, wherein the encapsulating structure (3) is an injection molded member integrally connected to the connecting surface (12) of the base plate (1).

6. A CCS assembly, connected to a side of poles (71) of cells (7), comprising an FPC (4), a support (5), a conductive busbar (6) and the temperature collecting device as claimed in any one of claims 1-5, wherein the support (5) is mounted on a side of poles (71) of cells (7), the conductive busbar (6) and the FPC (4) are respectively mounted on the support (5), the conductive busbar (6) is abutted against poles (71) of cells (7), the connecting surface (12) of the base plate (1) is arranged to be connected to the FPC (4) and the conductive busbar (6) respectively, and the encapsulating structure (3) is in contact with at least one of: poles (71) of cells (7) and a lateral surface of cells (7) where poles (71) are positioned.

7. The CCS assembly according to claim 6, wherein the base plate (1) is welded to the FPC (4), and the base plate (1) is welded to the conductive busbar (6).

8. The CCS assembly according to claim 7, wherein the support (5) comprises a first connecting surface (51) and a second connecting surface (52), the first connecting surface (51) covers surfaces where end surfaces of the poles (71) of a plurality of cells (7) are located, the second connecting surface (52) is vertically connected to the first connecting surface (51), and an axis of each cell (7) is parallel to the second connecting surface (52).

9. The CCS assembly according to claim 8, wherein the first connecting surface (51) is provided with a plurality of skeleton slots (511) in communication with each other and a plurality of assembly columns (512), the conductive busbar (6) is mounted within the skeleton slot (511) where each cell (7) is positioned, the conductive busbar (6) is abutted against poles (71) of cells (7), the conductive busbar (6) is provided with a first assembly hole (61), and the first assembly hole (61) is cooperated with the first assembly column (512) for position-restricting.

10. The CCS assembly according to claim 9, wherein the second connecting surface (52) is provided with a plurality of second assembly columns (521), the FPC (4) is provided with a plurality of second assembly holes (41) corresponding to the plurality of second assembly columns (521), and the second assembly hole (41) is cooperated with the second assembly column (521) for position-restricting.

11. The CCS assembly according to claim 8, wherein the FPC (4) is extended towards the first connecting surface (51) and bent to form a connecting part (42), and the connecting part (42) is connected to the connecting surface (12) of the base plate (1).

12. The CCS assembly according to any one of claims 7-11, wherein a height of the encapsulating structure (3) is identical to those of poles (71) of cells (7).

13. The CCS assembly according to claim 12, wherein the encapsulating structure (3) is made of epoxy resin.

14. A battery pack, comprising a battery-pack housing, a plurality of cells (7) positioned within the battery-pack housing, and the CCS assembly as claimed in any one of claims 6-13.
